# EUROPÄISCHE PATENTSCHRIFT

(11) **EP 2 125 205 B1**
(45) Veröffentlichungstag und Bekanntmachung des Hinweises auf die Patenterteilung: **06.08.2014**
(21) Anmeldenummer: 08707193.2
(22) Anmeldetag: 22.01.2008
(51) Int. Cl.: B01J 29/06, B01J 29/46, B01J 23/22, B01J 23/30, B01D 53/94

(54) **KATALYSATORZUSAMMENSETZUNG ZUR REDUKTION VON STICKOXIDEN**
CATALYST COMPOSITION FOR REDUCING NITROGEN OXIDES
COMPOSITION DE CATALYSEUR POUR LA REDUCTION D'OXYDES D'AZOTE

(30) Priorität: 22.01.2007 DE 102007003155
(43) Veröffentlichungstag der Anmeldung: 02.12.2009
(73) Patentinhaber: Süd-Chemie IP GmbH & Co. KG, 80333 München (DE)
(72) Erfinder: BERGER, Silke, 81477 München (DE); PAULUS, Martin, R83024 Rosenheim (DE); LECHNER, Anian, 83071 Stephanskirchen (DE)
(74) Vertreter: Stolmár, Matthias
(86) Internationale Anmeldenummer: PCT/EP2008/000464
(87) Internationale Veröffentlichungsnummer: WO 2008/089957

(56) Entgegenhaltungen:
- EP-A1- 0 544 282
- EP-A2- 0 255 121
- WO-A-2007/079853
- DE-A1- 3 529 060

## Beschreibung

Die vorliegende Erfindung betrifft eine KatalysatorzusammenSetzung zur Reduktion von Stickoxiden sowie einen Katalysator enthaltend eine erfindungsgemäße Katalysatorzusammensetzung.

Die Wirksamkeit von Dieselmotoren ist verglichen mit Benzinmotoren um ca. 25-35% besser. Jedoch weisen Dieselmotoren noch Probleme hinsichtlich ihrer Umweltverträglichkeit auf, insbesondere durch die Emission partikelförmiger krebserregender Russteilchen, für die Filter schon erhältlich sind und insbesondere durch den Ausstoß von Stickoxiden, die umweltschädlich sind und daher auch den Gegenstand zahlreicher Untersuchungen bilden.

Allgemein werden diese Stickoxide (NO, NO₂) mit dem Begriff NOₓ bezeichnet, die als Nebenprodukt der Verbrennungsvorgänge von Diesel in Kraftfahrzeugmotoren auftreten.

Da NOₓ zu Smog, erhöhten Ozonkonzentrationen am Boden und sauren Regen beiträgt, gibt es in vielen Staaten Vorschriften im Bezug auf die Emission von NOₓ durch Dieselmotoren.

Beispielsweise werden ab 2007 in den Vereinigten Staaten auf der Grundlage des Clean Air Act Amendments Autos und leichte Lastwagen, die mehr als 0,07 g/NOₓ pro Meile ausstoßen, verboten.

Ähnlich drastische Grenzwerte für die Reduktion des NOₓ-Ausstoßes werden in Zukunft auch für schwere Dieselmaschinen in beispielsweise Schwerlastkraftwagen erwartet.

Typischerweise werden derzeit in Dieselmotoren so genannte SCR-Katalysatoren (SCR = selektive katalytische Reduktion) eingesetzt, wobei in einem derartigen SCR-Katalysator das entstehende NOₓ mit einer Ammoniakquelle, im allgemeinen Harnstoff, vermischt und durch einen Katalysator geführt wird, wobei eine Reaktion zwischen Ammoniak und NOₓ zu Stickstoff und Wasser unterschiedliche Reaktionsprodukte ergibt.

Die besten Ergebnisse werden mit SCR-Katalysatoren erzielt, wenn ein 1:1-Verhältnis von Stickstoffoxid und Stickstoffdioxid vorherrscht, jedoch weist typischerweise das NOₓ aus dem Abgas von Dieselmotoren ungefähr ein Verhältnis von 9:1 für diese Oxide auf.

Übliche SCR-Katalysatorzusammensetzungen verwenden eine Mischung aus V₂O₅, WO₃ und TiO₂ und werden zumeist als wässrige Beschichtungssuspension ("Washcoat") auf Trägerstrukturen wie beispielsweise keramische oder metallische Strukturen, z. B. Wabenkörper, sog. Monolithe, Schäume, etc. aufgebracht (siehe US 5,451,387, US 2004/0109804 A1).

In der EP 0 544 282 A1 wird versucht, die Aktivität von Katalysatoren zur Entfernung von NOₓ, CO und NH₃ aus Abgasen zu erhöhen, in dem in der Katalysatorzusammensetzung neben Titan, Vanadium, Wolfram oder Molybdänverbindungen ein zweiter Bestandteil enthalten ist, der das Salz eines Edelmetalls ausgewählt aus Platin, Palladium und Rhodium enthält, wobei diese Edelmetalle vorab auf einem porösen Material, wie beispielsweise einem Zeolithen, Aluminiumdioxid oder Siliziumoxid geträgert sind.

Die EP 0 255 121 offenbart katalytisch aktive Formkörper, beispielsweise in Form von Wabenkörpern (sog. Vollkatalysatoren), die u.a. Titanoxid, Wolfram, Molybdänoxid, Vanadiumoxid und wenigstens ein auf einem Zeolithen geträgertes Metall umfassen. Katalytisch aktive Zusammensetzungen in Form von Beschichtungssuspensionen sind in der EP 0 0255 121 nicht offenbart.

Ebenfalls ist bekannt, eisenhaltige Zeolithe vom MFI-Typ für die selektive katalytische Reduktion von NOₓ mit Kohlenwasserstoffen in Gegenwart von hohen Gehalten an Sauerstoff und Wasserdampf einzusetzen (Chen et al. in Phys. Chem. Chem. Phys. 2000, 2, 3083-3090).

Weitere Probleme treten in Verbrennungsmotoren insbesondere bei Temperaturen ab ca. 500°C-600°C auf, da als Nebenprodukt Lachgas (N₂O) gebildet wird. Es ist bekannt (WO 99/49954 sowie US 2004/0109804 A1), dass die Umsetzung von N₂O unterhalb von 350°C mit einem eisenhaltigen Zeolithen gut verläuft. Bei höheren Temperaturen gibt es bislang keine befriedigende Lösung.

Die US 2004/0109804 A1 schlägt daher zur simultanen Entfernung von Stickoxiden und Lachgas aus einem Gasstrom enthaltend Stickstoffoxide und Lachgas ein Zweikatalysatorsystem vor, das als ersten Katalysator Kobalt enthält und als katalytisch wirksamer Träger ein anorganisches Metalloxid. Es werden insbesondere Kobalt-dotierte Zeolithe vorgeschlagen.

Nachteilig an dem System der US 2004/0109804 A1 ist jedoch, dass ein aufwendiges Zweikatalysatorsystem verwendet werden muss, das weiterhin noch die Gegenwart von Edelmetallen insbesondere Ruthenium, Rhodium, Palladium, Gold oder Platin erfordert.

Die Aufgabe der vorliegenden Erfindung bestand daher darin, eine Katalysatorzusammensetzung zur Verfügung zu stellen, die die Nachteile des vorgenannten Standes der Technik vermeidet. Insbesondere bestand die Aufgabe der vorliegenden Erfindung darin, eine einfache Katalysatorzusammensetzung zur selektiven gemeinsamen Entfernung von Lachgas und Stickoxiden bei Temperaturen oberhalb 500°C zur Verfügung zu stellen.

Die Aufgabe der vorliegenden Erfindung wird durch eine Katalysatorzusammensetzung gemäß Anspruch 1 gelöst, die zwei Oxide, ausgewählt aus V₂O₅, WO₃ und TiO₂ sowie einen metallausgetauschten edelmetallfreien Zeolithen umfasst. Die Zusammensetzung liegt dabei typischerweise in Form eines sog. "Washcoats", d.h. einer zumeist wässrigen Beschichtungssuspension vor. Weitere Bestandteile der dem Fachmann an sich bekannten üblichen Beschichtungssuspensionen sind typischerweise SiO₂, Al₂O₃ etc. in Pulverform oder als Sol.

Bevorzugt enthält die Zusammensetzung alle drei der vorstehend genannten Oxide zusammen, jedoch sind für die meisten Anwendungen Kombinationen aus zwei dieser Oxide ausreichend.

Überraschenderweise wurde gefunden, dass ein Katalysator enthaltend die erfindungsgemäße Katalysatorzusammensetzung auch bei Temperaturen von ca. 450°C bis 600°C, insbesondere von 500-550°C, die Entstehung von Lachgas, N₂O, vollständig unterdrückt. Außerdem können die weiteren Stickoxide (NO, NO₂) bis zu einem Grad entfernt werden, der auch den strengen US-Vorschriften wie sie vorstehend erwähnt worden sind, Genüge tut.

Ebenso überraschend war der Befund, dass die Gegenwart von Edelmetallen wie Pd, Pt, Au, Ag, Ru, Rh nicht vonnöten ist, um den gewünschten Effekt zu erzielen (s. z. B. die Lehre EP 0 544 282 A1). Edelmetallfrei bedeutet erfindungsgemäß, dass keines der vorgenannten Edelmetalle in der erfindungsgemäßen Zusammensetzung im Rahmen der üblichen Meßgenauigkeit vorhanden ist.

Zwar war bekannt, dass beispielsweise ZSM-5 Zeolithe, die auch erfindungsgemäß bevorzugt eingesetzt werden, die SCR-Aktivität der Katalysatoren bei Temperaturen unterhalb 400°C besonders erhöhen, jedoch die Produktion von Lachgas, N₂O nicht unterdrücken können (US 5, 451, 387).

Es wurde gefunden, dass das zusätzliche Vorhandensein eines metallausgetauschten Zeolithen neben den vorgenannten Oxiden die Entfernung von Lachgas besonders begünstigt.

Metallausgetauscht heißt vorliegend, dass Metallionen in das Gerüst eines Zeolithen durch Kationenaustausch eingebaut werden. Der Austausch erfolgt nach beliebigen, dem Fachmann bekannten Verfahren. Im Unterschied zu "ausgetauscht" wird der Begriff "geträgert" gebraucht. Bei mit Metall "geträgerten" Zeolithen findet bzw. fand somit kein Ionenaüstausch statt.

Bevorzugte Metalle für den Austausch sind dabei Co, Cu, Fe, Ni.

Ganz besonders bevorzugt wird wein Fe-ausgetauschter Zeolith, insbesondere ein Festkörper-ionenausgetauschter Eisenzeolith verwendet, wie er beispielsweise in dem EP 0 965 080 B1 oder in dem US 6, 887, 815 B2 beschrieben ist, da damit Lachgas unter den vor- und nachstehend geschilderten Reaktionsbedingungen besonders effizient entfernt wird.

Es wurde gefunden, dass der Gehalt an metallausgetauschten Zeolithen in der Katalysatorzusammensetzung kleiner als 10 Gew.-% betragen sollte, damit die gewünsche, katalytische Wirkung bei der Entfernung der anderen Stickoxide und die gleichzeitige Unterdrückung von Lachgas bei Arbeitstemperaturen von 500-600°C noch erzielt wird.

Ganz besonders bevorzugt ist eine Menge von 5-8 Gew.-% des metallausgetauschten Zeolithen bezogen auf die gesamte Katalysatorzusammensetzung.

Bevorzugte topologische Strukturen des Zeolithen, der erfindungsgemäß verwendet werden kann, sind MFI, BEA, MOR, REI, REY. Die Nomenklatur der Zeolithe folgt den Vorschlägen von Meyer et al. "Atlas of Zeolite Structure Types", 4th Edition, Butterworth Heinemann, 1996, auf die hier vorstehend vollumfänglich Bezug genommen wird.

Ganz besonders bevorzugt ist der metallausgetauschte Zeolith ausgewählt aus den topologischen Strukturen MFI oder BEA. Ganz besonders bevorzugt ist eine topologische Struktur vom MFI-Typ und hier insbesondere die so genannten ZSM-5-, ZSM-11- ZSM-12 und ZSM-20-Strukturen.

In den bevorzugten Ausführungsformen wird die Katalysatorzusammensetzung auf einen Träger zumindest bereichsweise aufgebracht. Der Träger, so genannte Waben, Monolithe etc., umfasst im allgemeinen Strukturen mit durchgehenden Öffnungen, die entweder aus Keramik wie beispielsweise Cordierit oder einem Metall bzw. einer Legierung (Fa. Emitec) hergestellt sein können. Weitere Strukturen sind beispielsweise metallische Schäume (Fa. Inco).

In weiteren bevorzugten Ausführungsformen der Erfindung wird der Träger zunächst nur mittels eines so genannten "Washcoats" enthaltend die erfindungsgemäße Katalysatorzusammensetzung, enthaltend zwei Oxide ausgewählt aus V₂O₅, WO₃, TiO₂ mit einer ersten Schicht beschichtet, und anschließend wird auf die erste Schicht bereichsweise ein Washcoat, der nur den metallausgetauschten, insbesondere eisenhaltigen Zeolith enthält, aufgebracht. Dadurch werden selektiv nur die Zonen beschichtet, wo eine Lachgasunterdrückung erforderlich ist. Natürlich kann die zweite Beschichtung nicht nur bereichsweise sondern auch ganzflächig auf der ersten Schicht erfolgen.

Bevorzugt ist dabei der metallausgetauschte, insbesondere eisenhaltige Zeolith stromabwärts am Ende des Trägers aufgebracht, so dass zuerst die katalytische Reduktion der Stickoxide und anschließend die Entfernung des Lachgases am stromabwärtigen Ende des Trägers erfolgen kann.

Die Verwendung des entsprechenden Katalysatorsystems zur Entstickung von Dieselabgasen ist besonders bevorzugt.

Die Erfindung ist nachfolgend anhand von Ausführungsbeispielen beschrieben, die jedoch nicht als beschränkend verstanden werden sollen..

### Beispiel 1:

### Herstellung eines erfindungsgemäßen Katalysators

Als Trägerstruktur wird ein so genannter funktioneller strukturierter Metallträger der Fa. Emitec (Material Yhf (1,4767) verwendet. Dieser wird vor dem Beschichten ggf. im Ultraschallbad entfettet und bei 30 Min. bei ca. 80°C getrocknet.

Falls erforderlich, wird der Metallträger bei 500-900°C kalziniert, was durch die so hervorgerufene Bildung einer Oxidschicht die Haftung des aufzubringenden Washcoats verbessern kann.

Zur Herstellung des Washcoats werden 90 g TiO₂-Pulver, 10 g WO₃, 20 g SiO₂-Sol 15 g TiO₂-Sol, 20 ml 10%ige wässrige Vanadyloxalat-Lösung und 80 g destilliertes Wasser miteinander vermischt.

Der so hergestellte Washcoat wird auf den Monolithen unter Vibration aufgebracht, wobei das Volumen des Washcoats 50-120% des Volumens des Trägers entspricht.

Mittels an sich bekannter Verfahren wird anschließend der metallische Monolith entleert.

Die Washcoat-Reste an der Auslaufseite des Monolithen werden abgesaugt und anschließend bei 80°C getrocknet und bei ca. 500°C für 5 Stunden kalziniert.

Anschließend wird eine Mischung aus 8 g Eisen-ausgetauschten Zeolith BEA (erhältlich von der Firma Süd-Chemie) mit 35 g SiO₂ 10 g TiO₂-Sol und 40 g destilliertem Wasser vermischt und wie die erste Washcoat-Suspensiön auf die erste Schicht des Trägers stromabwärts bereichsweise auf die Wabe aufgebracht und mittels des gleichen Verfahrens entfernt und ebenfalls bei 500°C kalziniert.

### Beispiel 2:

### Herstellung einer weiteren erfindungsgemäßen Katalysators

Die Trägerstruktur ist die gleiche wie in dem Beispiel 1.

Zur Herstellung des Waschcoats werden 80 g TiO₂, 10 g Fe-BEA (eisenausgetauschter Zeolith, erhältlich von der Firma Süd-Chemie), 10 g WO₃, 20 g SiO₂-Sol, 15 g TiO₂-Sol, 20 ml 10%ige wässrige Vanadyloxalat-Lösung und 80 g destilliertes Wasser miteinander vermischt.

Der so hergestellte Washcoat wird wie in Beispiel 1 auf den Monolithen aufgebracht und der Überschuss entfernt und kalzi

### Beispiel 3:

Es wurden mit dem in Beispiel 1 hergestellten Katalysator Messungen bezüglich der Unterdrückung des Entstehens von N₂O durchgeführt.

Als Vergleich diente ein Katalysator, auf dem keine Schicht aus einem eisenausgetauschten Zeolithen (Fe-Zeolithen) aufgebracht war.

**Tabelle 1: Testergebnisse bei der Unterdrückung der N₂O-Reaktion**

| | Kat. ohne Fe-Zeolith-Schicht | | Kat. mit Fe-Zeolith-Schicht | |
|---|---|---|---|---|
| Temperatur [°C] | NOₓ-Umsatz gesamt | NOₓ-Umsatz zu N₂O | NOₓ-Umsatz gesamt | NOₓ-Umsatz zu N₂O |
| 550 | 50,8 | 17,9 | 89,3 | 1,4 |
| 500 | 64,2 | 5,1 | 90,8 | 0,7 |
| 450 | 74,7 | 1,0 | 90,0 | 0,2 |
| 400 | 80,5 | 0,1 | 87,3 | 0,0 |
| 350 | 77,3 | 0,0 | 78,4 | 0,0 |
| 300 | 55,9 | 0,0 | 57, 1 | 0,0 |
| 250 | 27,8 | 0,0 | 31,5 | 0,0 |

### Testbedingungen:

Feedgas: 1000 ppm NO, 5% H₂O, NH₃ variabel, Druckluft
GHSV: 80.000 1/h

Die Messwerte der NOₓ-Umsätze werden bei 10 ppm NH₃-Schlupf genommen.

Fe-Zeolith-Schicht: 15% der Länge des Testmonolithen am Ende der Kanäle (Gasaustrittsseite), Aktivkomponente Fe-BEA.

Wie aus den Ergebnissen ersichtlich ist, wird mittels des erfindungsgemäßen Katalysators mit der Fe-Zeolithschicht die Lachgasentstehung bei der Entstickung von Dieselabgasen wirkungsvoll unterdrückt. Dies insbesondere bei Temperaturen von 450-550°C.

## Patentansprüche

1. Katalysatorzusammensetzung zur Reduktion von Stickoxiden enthaltend zwei Oxide ausgewählt aus V₂O₅, WO₃, TiO₂ sowie einen metallausgetauschten edelmetallfreien Zeolithen, wobei das Metall des metallausgetauschten Zeolithen ausgewählt ist aus Co, Cu, Fe, Ni, **dadurch gekennzeichnet, dass** der Gehalt an metallausgetauschtem Zeolithen < 10 Gew.-% bezogen auf die Katalysatorzusammensetzung beträgt.

2. Katalysatorzusammensetzung nach Anspruch 1, **dadurch gekennzeichnet, dass** das Metall Fe ist.

3. Katalysatorzusammensetzung nach Anspruch 1 oder 2, **dadurch gekennzeichnet, dass** V₂O₅, WO₃, TiO₂ enthalten sind.

4. Katalysatorzusammensetzung nach Anspruch 3, **dadurch gekennzeichnet, dass** der Gehalt an metallausgetauschten Zeolithen 5-8 Gew.-% bezogen auf die gesamte Katalysatorzusammensetzung beträgt.

5. Katalysatorzusammensetzung nach Anspruch 4, **dadurch gekennzeichnet, dass** der metallausgetauschte Zeolith ausgewählt ist aus REY, und den topologischen Strukturen MFI, BEA, MOR, ERI.

6. Katalysatorzusammensetzung nach Anspruch 5, **dadurch gekennzeichnet, dass** die topologische Struktur MFI oder BEA ist.

7. Katalysatorzusammensetzung nach Anspruch 6, **dadurch gekennzeichnet, dass** die topologische Struktur MFI ausgewählt ist aus ZSM-5, ZSM-11, ZSM-12 und ZSM-20.

8. Katalysator zur Reduktion von Stickoxiden umfassend einen Träger, auf dem bereichsweise eine Katalysatorzusammensetzung nach einem der vorhergehenden Ansprüche aufgebracht ist.

9. Katalysator nach Anspruch 8, **dadurch gekennzeichnet, dass** der Träger aus einer Keramik besteht.

10. Katalysator nach Anspruch 9, **dadurch gekennzeichnet, dass** der Träger ein metallischer Träger ist.

11. Katalysator nach einem der Ansprüche 8 bis -10, wobei der Träger eine erste Schicht enthaltend eine Mischung aus zwei Oxiden ausgewählt aus V₂O₅, WO₃, TiO₂ aufweist und bereichsweise eine darauf angeordnete zweite Schicht, enthaltend einen metallausgetauschten edelmetallfreien Zeolithen.

12. Katalysator nach Anspruch 11, **dadurch gekennzeichnet, dass** die zweite Schicht, enthaltend den metallausgetauschten Zeolithen, stromabwärts am Ende des Trägers auf der ersten Schicht aufgebracht ist.

13. Katalysator nach Anspruch 12, **dadurch gekennzeichnet, dass** das Metall des metallausgetauschten Zeolithen ausgewählt ist aus Co, Cu, Fe, Ni.

14. Katalysator nach Anspruch 13, **dadurch gekennzeichnet, dass** das Metall Fe ist.

15. Verwendung des Katalysators nach einem der vorhergehenden Ansprüche 8 bis 14 zur Entstickung von Dieselabgasen.

## Claims

1. Catalyst composition for reducing nitrogen oxides, containing two oxides selected from V₂O₅, WO₃, TiO₂ as well as a metal-exchanged zeolite free of noble metals, wherein the metal of the metal-exchanged zeolite is selected from Co, Cu, Fe, Ni, **characterized in that** the metal-exchanged zeolite content is < 10 wit.-% relative to the catalyst composition.

2. Catalyst composition according to claim 1, **characterized in that** the metal is Fe.

3. Catalyst composition according to claim 1 or 2, **characterized in that** V₂O₅, WO₃, TiO₂ are contained.

4. Catalyst composition according to claim 3, **characterized in that** the metal-exchanged zeolite content is 5-8 wt.-% relative to the total catalyst composition.

5. Catalyst composition according to claim 4, **characterized in that** the metal-exchanged zeolite is selected from REY, and the topological structures MFI, BEA, MOR, ERI.

6. Catalyst composition according to claim 5, **characterized in that** the topological structure is MFI or BEA.

7. Catalyst composition according to claim 6, **characterized in that** the MFI topological structure is selected from ZSM-5, ZSM-11, ZSM-12 and ZSM-20.

8. Catalyst for reducing nitrogen oxides comprising a support, to which a catalyst composition according to one of the previous claims is applied in areas.

9. Catalyst according to claim 8, **characterized in that** the support consists of a ceramic.

10. Catalyst according to claim 9, **characterized in that** the support is a metallic support.

11. Catalyst according to one of claims 8 to 10, wherein the support has a first layer containing a mixture of two oxides selected from V₂O₅, WO₃, TiO₂ and, in areas, a second layer arranged thereon containing a metal-exchanged zeolite free of noble metals.

12. Catalyst according to claim 11, **characterized in that** the second layer, containing the metal-exchanged zeolite, is applied to the first layer downstream at the end of the support.

13. Catalyst according to claim 12, **characterized in that** the metal of the metal-exchanged zeolite is selected from Co, Cu, Fe, Ni.

14. Catalyst according to claim 13, **characterized in that** the metal is Fe.

15. Use of the catalyst according to one of the previous claims 8 to 14 for denitrifying diesel exhaust gases.

## Revendications

1. Composition de catalyseur pour la réduction d'oxydes d'azote contenant deux oxydes sélectionnés parmi V₂O₅, WO₃, TiO₂ ainsi qu'une zéolithe exempte de métaux précieux, à échange métallique, dans laquelle le métal de la zéolithe à échange métallique est sélectionné parmi Co, Cu, Fe, Ni, **caractérisée en ce que** la teneur en zéolithe à échange métallique est < 10 % en poids par rapport à la composition de catalyseur.

2. Composition de catalyseur selon la revendication 1, **caractérisée en ce que** le métal est Fe.

3. Composition de catalyseur selon la revendication 1 ou 2, **caractérisée en ce que** V₂O₅, WO₃, TiO₂ sont contenus.

4. Composition de catalyseur selon la revendication 3, **caractérisée en ce que** la teneur en zéolithe à échange métallique est de 5 à 8 % en poids par rapport à la composition de catalyseur entière.

5. Composition de catalyseur selon la revendication 4, **caractérisée en ce que** la zéolithe à échange métallique est sélectionnée parmi REY et les structures topologiques MFI, BEA, MOR, ERI.

6. Composition de catalyseur selon la revendication 5, **caractérisée en ce que** la structure topologique est MFI ou BEA.

7. Composition de catalyseur selon la revendication 6, **caractérisée en ce que** la structure topologique MFI est sélectionnée parmi ZSM-5, ZSM-11, ZSM-12 et ZSM-20.

8. Catalyseur pour la réduction d'oxydes d'azote comprenant un support sur lequel une composition de catalyseur selon l'une quelconque des revendications précédentes est appliquée par région.

9. Catalyseur selon la revendication 8, **caractérisé en ce que** le support se compose d'une céramique.

10. Catalyseur selon la revendication 9, **caractérisé en ce que** le support est un support métallique.

11. Catalyseur selon l'une quelconque des revendications 8 à 10, dans lequel le support présente une première couche contenant un mélange de deux oxydes sélectionnés parmi V₂O₅, WO₃, TiO₂ et par région une seconde couche disposée sur celle-ci contenant une zéolithe exempte de métaux précieux, à échange métallique.

12. Catalyseur selon la revendication 11, **caractérisé en ce que** la seconde couche contenant la zéolithe à échange métallique est appliquée sur la première couche en aval à l'extrémité du support.

13. Catalyseur selon la revendication 12, **caractérisé en ce que** le métal de la zéolithe à échange métallique est sélectionné parmi Co, Cu, Fe, Ni.

14. Catalyseur selon la revendication 13, **caractérisé en ce que** le métal est Fe.

15. Utilisation du catalyseur selon l'une quelconque des revendications précédentes 8 à 14 pour la dénitruration de gaz d'échappement diesel.
